# EUROPÄISCHE PATENTSCHRIFT

(11) **EP 1 619 430 B1**
(45) Veröffentlichungstag und Bekanntmachung des Hinweises auf die Patenterteilung: **15.08.2007**
(21) Anmeldenummer: 05008965.5
(22) Anmeldetag: 23.04.2005
(51) Int. Cl.: F16K 7/20, F16K 11/044

(54) **Ventil**
Valve
Soupape

(30) Priorität: 22.07.2004 DE 202004011532 U
(43) Veröffentlichungstag der Anmeldung: 25.01.2006
(73) Patentinhaber: BÜMACH ENGINEERING INTERNATIONAL B.V., 7825 VS Emmen (NL)
(72) Erfinder: Büter, Josef, 49733 Haren/Altenberge (DE)
(74) Vertreter: Haussingen, Peter

(56) Entgegenhaltungen:
- EP-A- 0 815 915
- WO-A-98/09015
- DE-B- 1 047 558
- DE-U- 6 801 286

## Beschreibung

Die Erfindung bezeichnet ein Ventil mit einem elastischen Formkörper als Sperrelement, das von Außen mechanisch betätigt wird.

Zur Steuerung eines. Fluidstroms zwischen benachbarten Räumen mit unterschiedlichem Druck, sind aus dem Stand der Technik neben Rückschlagventilen mit starrem Dichtelement und verformbarem elastischen Druckelement auch Ventile bekannt, deren elastisches Dichtelement von Außen mittels mechanischer Vorrichtungen verformt wird, wodurch Strömungen zwischen einem Einlass und einem Auslass gesteuert werden können.
Rückschlagventile der genannten Art werden beispielsweise für den Druckausgleich zwischen dem Kolbenstangenraum und einem Druckspeicher von Arbeitszylindern eingesetzt, um im Betrieb auftretende Druckverluste fortwährend auszugleichen.
In der Druckschrift DE-U-6 801 286 wird ein solcher, einen Druckspeicher aufweisender Arbeitszylinder beschrieben, dessen Druckräume über eine radiale Verbindungsleitung mit vorgespannten Rückschlagventilen mit einer Kugel als Dichtelement verbunden sind, wobei eines der Rückschlagventile in der kolbenstangenseitigen Endstellung vom Kolben über einen Stift mechanisch geöffnet wird und so den Fluidstrom des Arbeitsmediums zum Aufladen des Druckspeichers freigibt.

Eine Kolben-Zylinder-Einheit, die den Druckausgleich zwischen dem Kolbenstangenraum und dem, mit dem Zylinderraum verbundenen Druckspeicher mittels eines in der Hauptachse des Arbeitszylinders liegenden Rückschlagventils bei Druckbeaufschlagung des Arbeitskolbens gewährleistet, wird in der Druckschrift EP 0 151 650 B1 offenbart. Das mittels Feder vorgespannte Rückschlagventil mit einer Kugel ist in den Arbeitskolben integriert und öffnet in Ausfahrrichtung der Kolbenstange immer dann, wenn der Arbeitsdruck des Mediums den Druck im Druckspeicher überschreitet, so dass auf diese Weise Leckverluste zuverlässig kompensiert und das Fülldruckniveau des Druckspeichers im erforderlichen Bereich gehalten werden kann.

Die Herstellung der als Druckausgleichsventile eingesetzten Rückschlagventile erfordert für eine genügende Abdichtung die präzise, aufwändige Bearbeitung des Dichtelements und dessen Sitz als Gegenfläche.

Für ein vorgespanntes Sitzventil als Gasaustauschsperre in einem Zugzylinder wird in der Druckschrift G 92 01 972.2 vorgeschlagen, ein kugel-, kegel- oder plattenförmiges Dichtelement und/oder dessen Sitz als Gegenfläche aus einem Kunststoff oder einem ähnlichen elastischen Material herzustellen und auf Basis dessen formelastischer Eigenschaft eine zuverlässig dichte Sperre zu realisieren. Ebenso wird vorgeschlagen das Federelement zur Vorspannung des Dichtelements gegen seinen Sitz, aus einem Elastomerkörper zu bilden.
Mit der optionalen Verwendung von Elastomeren für das Dichtelement und/oder dessen Sitz wird zwar bei sicherer Abdichtung eine günstigere Bearbeitung des Ventilgehäuses ermöglicht, jedoch die Montage des Ventils auf Grund der Anzahl der Einzelteile nicht vereinfacht als auch die Zuverlässigkeit des Ventils nicht verbessert.

DE 104 7558B offenbart ein Ventil gemäß dem Oberbegriff des unabhängigen Anspruchs 1.

Die Aufgabe der Erfindung besteht darin, ein steuerbares Ventil mit einem elastischem Formkörper als Sperrelement zu entwickeln, das eine hohe Zuverlässigkeit gewährleistet, günstig herstellbar und vielseitig einsetzbar ist.

Die Aufgabe wird durch die im Schutzanspruch 1 aufgeführten Merkmale gelöst. Bevorzugte Weiterbildungen ergeben sich aus den Unteransprüchen.

Das erfindungsgemäße Ventil besteht im Wesentlichen aus einer Ventilkammer mit zwei Ports zum Anschließen der zu trennenden Druckräume und einem in der Ventilkammer mit axialer Vorspannung angeordneten Formkörper aus einem Elastomer als eine Einheit aus Dicht- und Federelement. Der elastische Formkörper wird in Abhängigkeit vom Elastizitätsmodul des eingesetzten Elastomer und der jeweils einzustellenden Vorspannung in seiner Länge größer gewählt als die axiale Ausdehnung der Ventilkammer. Beim Einbau in die Ventilkammer wird der Formkörper um einen differentiellen Wert seiner Länge gestaucht, wodurch eine sichere Abdichtung der Anschlüsse zu den Druckräumen gewährleistet ist.
In den Anschlüssen zu den Druckräumen sind Stößel mit einem geringeren Querschnitt als die der Anschlüsse selbst, zur Gewährleistung eines Fluidstroms, gegenüber den Stirnflächen des Formkörpers angeordnet, über deren Stirnfläche die jeweilige Stirnfläche des elastischen Formkörpers vom Querschnitt des Anschlusses im Ventilraum abgehoben wird, indem in den Stößel eine axiale Kraft eingebracht wird.
Der elastische Formkörper als Sperrelement weist einen geringeren Durchmesser als der Ventilraum auf, wobei dieses axial symmetrisch mit zwei zylindrischen Endstücken mit einem kegelförmigen Übergangsteil, die in ein zylindrisches Mittelstück mit einem auf die Hälfte reduziertem Durchmesser übergehen, ausgebildet ist, deren Längenverhältnisse etwa 1:1:1 betragen. Zum sicheren Durchströmen eines Druckmittels bei der Verformung des Sperrkörpers sind die zylindrischen Endstücke und partiell das zugehörige kegelförmige Übergangsteil am Umfang abgeflacht.

Des Weiteren ist auf dem zylindrischen Mittelstück, vorzugsweise über dessen gesamte axiale Länge, eine geschlitzte Buchse aus einem Elastomer angeordnet, deren Außendurchmesser dem der zylindrischen Endstücke entspricht sowie der Innendurchmesser geringfügig größer als der des zylindrischen Mittelstücks ist.
Steht am Einlass des Ventils ein Druck eines Fluids an und wird dabei auf den Stößel im Einlass eine axiale Kraft zum Abheben des einen zylindrischen Endstücks vom Anschluss ausgeübt, strömt das Fluid zunächst in den Ventilraum und kann erst dann in den anderen Raum gelangen, wenn der Stößel im Auslass von Außen ebenfalls mit einer Kraft beaufschlagt wird, die ausreicht, den Sperrkörper zu verformen. Hierbei wird das Mittelstück so weit gestaucht, dass über dessen sich dadurch vergrößerten Durchmesser der Schlitz der Buchse spaltförmig geöffnet wird und das Medium über den Auslass in den anderen Raum strömen kann. Es erfolgt dadurch beispielsweise der Druckausgleich bei einem Arbeitszylinder mit Druckspeicher.
Bei der Ausführung des Ventils nur mit einem Stößel im Auslass, strömt das Druckmedium über den Einlass, mit geeignet ausgeführtem Strömungskanal, bis in die Ventilkammer und nach dem Abheben der Stirnfläche des Sperrkörpers, mittels des Stößels, von der Bohrung des zweiten Ports als Auslass in den zweiten Druckraum.
Die geschlitzte Buchse dient zum Einen der Stabilisierung des Mittelstücks des Sperrkörpers und zum Anderen der Begrenzung der Durchflussmenge eines Mediums.
Vorteilhaft ist an der auf die Stirnseite des elastischen Formkörpers einwirkenden Seite der Stößel ein Druckstück angeformt, dessen Durchmesser dem des zylindrischen Endstücks des Sperrkörpers entspricht.

Es besteht auch die Möglichkeit, den Einlass in das Ventilgehäuse oder/und die zugeordnete Stirnfläche des Formkörpers so auszubilden, dass das Fluid unter Druck bis in die Ventilkammer strömen kann und lediglich der Ausgang über den im Auslass angeordneten Stößel freigegeben werden kann.

Auf eine äquivalente Weise ist ein vorgespanntes Rückschlagventil realisierbar, wobei der Druck eines Fluids an einer Seite der Ventilkammer gegen den mit der ersten Stirnfläche des elastischen Formkörpers gesperrten Einlass anliegt und mittels der geeigneten Ausbildung des Auslasses oder/und des Bereichs der zugeordneten zweiten Stirnfläche des elastischen Formkörpers mit Strömungskanälen, der in diesem Fall axial unsymmetrisch mit nur einem zylindrischen Endstück mit einem speziellen Übergangsteil ausgebildet sein kann, bei einem Überdruck am Einlass frei abströmen kann.
Es sind weitere Ausführungsformen des Ventils sowie des elastischen Sperrkörpers einschließlich der auf dem Mittelteil angeordneten geschlitzten Buchse denkbar. Das Ventil könnte auch an beiden Ports als Einlass oder Auslass mit Stößeln ausgeführt sein.
Des Weiteren wäre eine Ausführung als 3-Port Ventil mit einem Einlass und zwei Auslässen realisierbar, wobei der Einlass radial in die Mitte der Ventilkammer mündet und die Auslässe über Stößel geöffnet werden.
Das Anwendungsgebiet ist nicht auf den Druckausgleich beschränkt. Es sind auch Auslaufventile oder Dosierventile realisierbar, wobei die geschlitzte Buchse von vornherein einen Spalt aufweist, über dessen Ausgangsbreite sich Mengenbereiche für den Fluidstrom vorgeben lassen.

Die Ventilkammer kann sowohl in einem separaten Bauteil als Ventilgehäuse ausgebildet als auch integraler Bestandteil eines funktionalen Teils, wie beispielsweise dem Arbeitskolben eines Arbeitszylinders, sein.

Die Vorteile der Erfindung bestehen insbesondere in der einfachen und günstigen Herstellung des Ventilgehäuses sowie des elastischen Formkörpers als Sperrelement bei einfachster Montage des Ventils aus wenigen Einzelteilen, wobei der funktionssichere sowie wartungsfreie Einsatz unter extremen chemischen und physikalischen Bedingungen gewährleistet ist.
Mit der Wahl des Elastomers bezüglich seines Elastizitätsmoduls als auch der weiteren chemischen und physikalischen Eigenschaften kann das Sperrelement den im Einsatz auftretenden Drücken und Bedingungen angepasst werden.
Hervorzuheben ist auch das breite Anwendungsgebiet, vom Einsatz als gesteuertes Druckausgleichsventil, Rückschlagventil, Überdruckventil, Dosierventil, Auslaufventil bis zum Mehrportventil.
Die Erfindung wird als Ausführungsbeispiel an Hand von
- Fig.: 1 als Schnitt durch das Ventil
- Fig.: 2 als Darstellung des Formkörpers
näher erläutert.

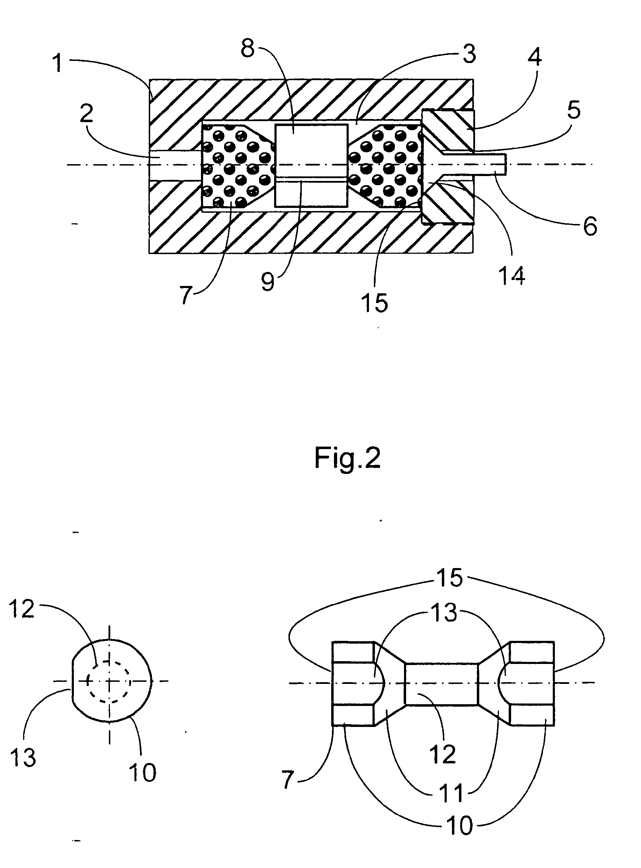

Nach Fig. 1 besteht ein Ventil aus einem Ventilgehäuse 1 mit einem ersten Port 2, einer Ventilkammer 3, die mittels eines Verschlussteil 4 mit einer Bohrung als zweiter Port 5 mit darin angeordnetem Stößel 6 und einem in der Ventilkammer 3 angeordneten elastischen Formkörper als Sperrelement 7 mit einer Buchse 8 aus einem Elastomer mit einem Schlitz 9. Das in Fig. 2 in der Front- und Seitenansicht dargestellte Sperrelement 7, dessen Länge größer als die Länge sowie dessen Durchmesser geringer als der der Ventilkammer 3 sind, ist axial symmetrisch mit jeweils einem zylindrischen Endstück 10 mit einem kegelförmigem Übergangsteil 11, die in ein zylindrisches Mittelstück 12 übergehen, aufgebaut. Die Länge des Mittelstücks 12 beträgt ein Drittel der Gesamtlänge des Sperrkörpers 7 mit einem gegenüber den zylindrischen Endstücken 10 auf 50% reduziertem Durchmesser. Die zylindrischen Endstücke 10 und partiell die zugehörigen kegelförmigem Übergangsteile 11 weisen zudem jeweils eine Abflachung 13 auf.
Das Ventilgehäuse 1 des Ventils kann integraler Bestandteil eines Arbeitskolbens eines Arbeitszylinders sein, um den Druckausgleich zwischen dem Kolbenstangenraum und einem mit dem Zylinderraum verbundenen Druckspeicher zu realisieren. Auf den Stößel 6 wird über einen Anschlag im Zylinderrohr in einer Endstellung des Arbeitskolbens eine axiale Kraft eingebracht. Der Stößel 6 mit einem Druckstück 14 größeren Durchmessers wirkt dabei auf eine Stirnfläche 15 des Sperrelements 7, gibt den zweiten Port 5 im Verschlussteil 4 frei, wobei gleichzeitig das Mittelstück 12 verformt, dessen Durchmesser vergrößert wird. Infolge dessen erweitert sich der Schlitz 9 in der Buchse 8 zu einem Spalt. Über einen, hier nicht, dargestellten Strömungskanal am ersten Port 2 strömt das Druckmedium bereits bei Druckbeaufschlagung des damit verbundenen Arbeitsraums bis in die Ventilkammer 3. Am Endanschlag, wenn der zweite Port 5 wie zuvor beschrieben geöffnet ist, strömt das Druckmedium weiter durch den aus dem Schlitz 9 in der Buchse 8 gebildeten Spalt durch den zweiten Port 5 und lädt den in bekannter Weise Druckspeicher in bekannter Weise auf, wodurch Leckverluste von Speicherzylindern fortlaufend ausgeglichen werden.

### Verwendete Bezugszeichen

- 1: Ventilgehäuse
- 2: erster Port
- 3: Ventilkammer
- 4: Verschlussteil
- 5: zweiter Port
- 6: Stößel
- 7: Sperrelement
- 8: Buchse
- 9: Schlitz
- 10: Endstück
- 11: Übergangsteil
- 12: Mittelstück
- 13: Abflachung
- 14: Druckstück
- 15: Stirnfläche

## Patentansprüche

1. Ventil, bestehend im Wesentlichen aus einer Ventilkammer (3) mit mindestens zwei Ports, wovon zumindest ein Port (5), einen von außen mechanisch zu betätigenden Stößel (6) zum Einbringen einer axialen Kraft aufweist und einem in der Ventilkammer (3) mit axialer Vorspannung angeordneten elastischen Formkörper aus einem Elastomer als Sperrelement (7), wobei der Stößel (6) auf eine Stirnfläche des Sperrelements (7) wirkt und dieses verformt, um den mit dem Stößel (6) versehenen Port (5) freizugeben, **dadurch gekennzeichnet,**
**dass** das Sperrelement (7) als eine Einheit aus Dicht- und Federelement axial symmetrisch mit einem zylindrischen Mittelstück (12), an dem beidseits ein konisches Übergangsteil (11) mit zylindrischem Endstück (10) ausgebildet ist, wobei jedes zylindrische Endstück (10) sowie jedes konische Übergangsteil (11) partiell eine Abflachung (13) aufweist und dass auf dem zylindrischen Mittelstück (12) eine Buchse (8) mit einem Schlitz (9) aus einem Elastomer angeordnet ist.

2. Ventil nach Anspruch 1, **dadurch gekennzeichnet,**
**dass** das Sperrelement (7) aus zwei symmetrisch zueinander angeordneten zylindrischen Endstücken (10) mit konischem Übergangsteil (11) mit Abflachungen (13) besteht.

3. Ventil nach Anspruch 1, **dadurch gekennzeichnet,**
**dass** am zylindrischen Mittelstück (12) ein Stützkörper mit Strömungsnuten angeformt ist.

## Claims

1. Valve substantially consisting of a valve chamber (3) having at least two ports, of which at least one port (5) comprises a tappet (6) to be mechanically actuated from the exterior in order to introduce an axial force, and consisting of a resilient moulded body as the blocking element (7) which is disposed in an axially pre-stressed manner in the valve chamber (3) and is formed of an elastomer, wherein the tappet (6) acts upon an end surface of the blocking element (7) and deforms the locking element in order to open the port (5) provided with the tappet (6), **characterised in that** the blocking element (7) [*lacuna*] as an assembly of a sealing and spring element in an axially symmetrical manner having a cylindrical central piece (12), on which a conical transition part (11) having a cylindrical end piece (10) is formed on both sides, wherein each cylindrical end piece (10) and each conical transition part (11) has in part a flattened portion (13), and **in that**
a sleeve (8) having a slit (9) formed of an elastomer is disposed on the cylindrical central piece (12).

2. Valve as claimed in Claim 1, **characterised in that** the blocking element (7) consists of two cylindrical end pieces (10) which are disposed so as to be mutually symmetrical and have a conical transition part (11) with flattened portions (13).

3. Valve as claimed in Claim 1, **characterised in that** a support body having flow grooves is formed on the cylindrical central piece (12).

## Revendications

1. Soupape composée essentiellement d'une chambre de
soupape (3) avec au moins deux accès, dont au moins un accès (5) présente un poussoir (6) à actionner mécaniquement de l'extérieur pour introduire une force axiale, et avec un corps moulé, élastique en élastomère, monté dans la chambre de soupape avec précontrainte, pour constituer un élément de blocage (7), le poussoir (6) agissant sur et déformant l'élément de blocage (7) pour libérer l'accès (5) comportant le poussoir (6),
**caractérisée en ce que**
- l'élément de blocage (7) est une unité constituée d'un élément d'étanchéité et d'un élément élastique symétriques axialement, encadrant une pièce centrale cylindrique (12), présentant des deux côtés une partie de transition conique (11) ayant une partie d'extrémité cylindrique (10), chaque extrémité cylindrique d'extrémité (10) et la partie de transition conique (11) présentant partiellement un plat (13), et
- une douille (8) en élastomère avec une fente (9) est montée sur la pièce centrale cylindrique (12).

2. Soupape selon la revendication 1, **caractérisée en ce que** l'élément de blocage (7) est constitué de deux pièces d'extrémité (10) cylindriques et symétriques l'une de l'autre, avec une partie de transition conique (11) présentant des plats (13).

3. Soupape selon la revendication 1, **caractérisée en ce que** sur la pièce centrale cylindrique (12) est formé un corps d'appui avec des rainures d'écoulement.
